# EUROPÄISCHE PATENTSCHRIFT

(11) **EP 2 780 423 B1**
(45) Veröffentlichungstag und Bekanntmachung des Hinweises auf die Patenterteilung: **16.05.2018**
(21) Anmeldenummer: 12784623.6
(22) Anmeldetag: 16.11.2012
(51) Int. Cl.: C09D 7/47, C09D 7/40, C08G 18/28, C09D 133/00, C08K 5/103

(54) **GLYCEROLDIESTER ENTHALTENDE BESCHICHTUNGSMITTEL UND DEREN VERWENDUNG IN MEHRSCHICHTLACKIERUNGEN**
GLYCEROL DIESTER-CONTAINING COATING AGENTS AND THE USE THEREOF IN MULTILAYER PAINTS
PRODUIT DE REVÊTEMENT CONTENANT DU DIESTER DE GLYCÉROL ET UTILISATION DUDIT PRODUIT DANS DES PEINTURES MULTICOUCHES

(30) Priorität: 17.11.2011 US 201161560860 P; 17.11.2011 EP 11189617
(43) Veröffentlichungstag der Anmeldung: 24.09.2014
(73) Patentinhaber: BASF Coatings GmbH, 48165 Münster (DE)
(72) Erfinder: HOFFMANN, Peter, 48308 Senden (DE); PORCHER, Sebastien, 67063 Ludwigshafen (DE); STEZYCKI, Jean-Francois, F-60180 Nogent/Oise (FR)
(74) Vertreter: BASF IP Association
(86) Internationale Anmeldenummer: PCT/EP2012/072879
(87) Internationale Veröffentlichungsnummer: WO 2013/072480

(56) Entgegenhaltungen:
- EP-A1- 1 717 281
- WO-A1-03/010247
- WO-A1-2010/121791
- ROUZEAU ET AL: "Criteria for the preparation of cross-linked poly(meth)acrylate microparticles by solution free radical polymerization", EUROPEAN POLYMER JOURNAL, PERGAMON PRESS LTD. OXFORD, GB, Bd. 43, Nr. 10, 28. September 2007 (2007-09-28), Seiten 4398-4414, XP022277530, ISSN: 0014-3057, DOI: 10.1016/J.EURPOLYMJ.2007.07.015

## Beschreibung

Die vorliegende Erfindung betrifft Beschichtungsmittelzusammensetzungen enthaltend Glyceroldiester, sowie Mehrschichtlackierungen die unter Verwendung der Beschichtungsmittelzusammensetzungen erhalten werden und ein Verfahren zur Herstellung derartiger Mehrschichtlackierungen und damit lackierte Substrate.

Es besteht die stete Nachfrage an Lacken, die bei gleichem Festkörpergehalt wie konventionelle Lacke in niedrigeren Schichtdicken aufgetragen werden können und zu einem gleichen oder sogar besseren Lackerscheinungsbild ("Appearance"), und insbesondere auch zu einem hervorragenden Verlauf der Lacke führen. Derartige Lacke könnten entscheidend zur Reduktion der industriell verwendeten Lackmengen, insbesondere in der Kraftfahrzeuglackierung beitragen. Sie sind daher aus ökonomischer Sicht vorteilhaft und tragen zugleich zum Umweltschutz bei. Wünschenswert ist es vor allem auch in der Kraftfahrzeuglackierung Beschichtungsmittel zur Verfügung zu stellen, die bei gleicher Schichtdicke wie konventionelle Lacke, an den Stellen der Kraftfahrzeugkarosserie, an welchen geometriebedingt nur geringe Schichtdicken erhältlich sind zu einem guten Lackerscheinungsbild führen.

Besonders erwünscht ist es, solche Beschichtungsmittel zur Verfügung zu stellen, die zudem mit einem geringen Gehalt an flüchtigen organischen Verbindungen ("Volatile Organic Compounds", kurz VOC) auskommen.

Eine der Aufgaben der vorliegenden Erfindung war es Beschichtungsmittelzusammensetzungen zur Verfügung zu stellen, welche die Appearance des gehärteten Beschichtungsmittels verbessern und für einen guten Verlauf ("Levelling") des Beschichtungsmittel sorgen und insbesondere einen vergleichsweise geringen VOC-Gehalt besitzen.

Die EP 1 717 281 A1 offenbart wässrige Bodenbeschichtungsmittel, die Mono- oder Diester eines Triols mit einer aliphatischen C₇-C₁₀-Monocarbonsäure enthalten. Ebenfalls offenbart werden besagte Mono- oder Diester als Bestandteile von Verlaufmitteln oder Weichmachern.

Diese Aufgabe wurde durch Bereitstellung neuer Beschichtungsmittelzusammensetzungen, umfassend
(a) mindestens ein polymeres Polyol gewählt aus der Gruppe bestehend aus Poly(meth)acrylat-Polyolen, Polyester-Polyofen, Polyurethan-Polyolen und Polysiloxan-Polyolen,
(b) mindestens ein Vernetzungsmittel gewählt aus der Gruppe bestehend aus blockierten und unblockierten Polyisocyanaten, Aminoplast-Vernetzern und TACT und
(c) mindestens einen Glyceroldiester der allgemeinen Formel (I) 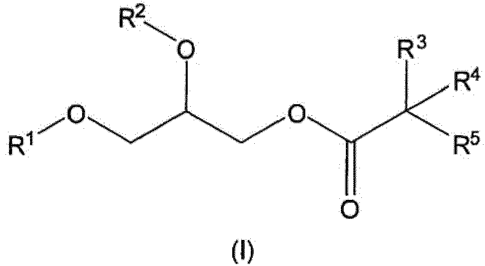 worin
   einer der beiden Reste R¹ oder R² ür Wasserstoff steht und der nicht für Wasserstoff stehende der beiden Reste R¹ und R² für einen Rest 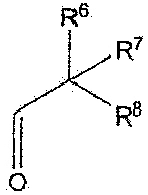 steht,
   und
   die Reste R³, R⁴, R⁵, R⁶, R⁷ und R⁸ unabhängig voneinander für Wasserstoff oder einen gesättigten, aliphatischen Rest mit 1 bis 20, vorzugsweise 1 bis 10 Kohlenstoffatomen stehen,
   mit der Maßgabe, dass die Reste R³, R⁴ und R⁵ gemeinsam mindestens 5 Kohlenstoffatome enthalten und die Reste R⁶, R⁷ und R⁸ gemeinsam mindestens 5 Kohlenstoffatome enthalten, gelöst.
In einer besonderen Ausführungsform steht R¹ für Wasserstoff. In einer weiteren besonderen Ausführungsform steht R² für Wasserstoff.

Vorzugsweise beträgt die gemeinsame Anzahl der Kohlenstoffatome in den Resten R³, R⁴ und R⁵ bzw. die gemeinsame Anzahl der Kohlenstoffatome in den Resten R⁶, R⁷ und R⁸ maximal 20, besonders bevorzugt 5 bis 11 und ganz besonders bevorzugt 5 bis 9.

Bei den Resten R³, R⁴, R⁵, R⁶, R⁷ und R⁸ handelt es sich, abgesehen von obiger Maßgabe, unabhängig voneinander vorzugsweise um Wasserstoff oder Alkylreste mit 1 bis 10, besonders bevorzugt 1 bis 8 und ganz besonders bevorzugt 1 bis 6 Kohlenstoffatomen. Diese Alkylreste können substituiert oder unsubstituiert sein und sind vorzugsweise unsubstituiert. Diese Alkylreste können linear oder verzweigt sein, wobei für den Fall, dass R³ = R⁴ = R⁶ = R⁷ = H, die Reste R⁵ und R⁸ Alkylreste mit mindestens einer Verzweigung sind.

Sind diese Alkylreste substituiert, so sind als Substituenten vorzugsweise ein oder mehrere Reste gewählt aus der Gruppe bestehend aus Hydroxylgruppen, O(CO)ₙR⁹-Gruppen mit n = 0 oder 1 und R⁹ = verzweigtes oder unverzweigtes Alkyl mit 1 bis 6 Kohlenstoffatomen und Ether- und/oder Estergruppen enthaltenden aliphatischen Resten mit 1 bis 10, vorzugsweise 2 bis 10 Kohlenstoffatomen, als Substituenten vorhanden.

Vorzugsweise sind wenigstens zwei der Reste R³, R⁴ und R⁵ sowie zwei der Reste R⁶, R⁷ und R⁸ Alkylreste mit 1 bis 7 Kohlenstoffatomen. Ganz besonders bevorzugt ist mindestens einer der Reste R³, R⁴ und R⁵ ein Alkylrest mit 1 bis 3 Kohlenstoffatomen und ein weiterer der Reste R³, R⁴ und R⁵ ein Alkylrest mit mindestens 4 Kohlenstoffatomen sowie einer der Reste R⁶, R⁷ und R⁸ ein Alkylrest mit 1 bis 3 Kohlenstoffatomen und ein weiterer der Reste R⁶, R⁷ und R⁸ ein Alkylrest mit mindestens 4 Kohlenstoffatomen.

In einer ganz besonders bevorzugten Ausführungsform beträgt die Gesamtzahl der Kohlenstoffatome der Reste R³, R⁴ und R⁵ gemeinsam 6 bis 10, vorzugsweise 8 und die der Reste R⁶, R⁷ und R⁸ ebenfalls 6 bis 10, vorzugsweise 8.

Im Folgenden wird die erfindungsgemäße Beschichtungsmittelzusammensetzung auch kurz als "erfindungsgemäßes Beschichtungsmittel" bezeichnet.

Unter einem "polymeren Polyol" ist hierin ein Polyol mit mindestens zwei Hydroxylgruppen zu verstehen, wobei vom Begriff "polymer" hierin auch der Begriff "oligomer" umfasst ist. Oligomere bestehen hierin mindestens drei Monomereinheiten.

Die bevorzugten polymeren Polyole (a) weisen gewichtsmittlere Molekulargewichte M_{w} > 500 Dalton, gemessen mittels GPC (Gelpermeationschromatographie) gegen einen Polystyrolstandard, bevorzugt von 800 bis 100000 Dalton, insbesondere von 1000 bis 50000 Dalton auf. Höchst bevorzugt sind solche mit einem gewichtsmittleren Molekulargewicht von 1000 bis 10000 Dalton.

Die polymeren Polyole (a) weisen bevorzugt eine Hydroxylzahl (OH-Zahl) von 30 bis 400 mg KOH/g, insbesondere von 100 bis 300 mg KOH/g, und ganz besonders bevorzugt 120 bis 180 mg KOH/g auf.

In einer besonders bevorzugten Ausführungsform der erfindungsgemäßen Beschichtungsmittelzusammensetzung weicht die OH-Zahl des polymeren Polyols (a) oder der Mischung der polymeren Polyole (a) um nicht mehr als 50 %, besonders bevorzugt nicht mehr als 40 % und ganz besonders bevorzugt um nicht mehr als 20 % von der OH-Zahl der in der Beschichungsmittelzusammensetzung eingesetzten Glyceroldiester-Komponente (c) ab.

Die Glasübergangstemperaturen der polymeren Polyole (a), gemessen per DSC (Differential-Thermoanalyse, DSC 1000 der Fa TA-Instruments der Waters GmbH, Eschborn, Aufheizrate 10°C/Minute) liegen bevorzugt zwischen -150 und 100 °C, besonders bevorzugt zwischen -120°C und 80°C.

Unter dem Begriff "Poly(meth)acrylat" werden sowohl Polyacrylate als auch Polymethacrylate sowie Polymere, die sowohl Methacrylate bzw. Methacrylsäure als auch Acrylate bzw. Acrylsäure enthalten verstanden. Die Poly(meth)acrylate können neben Acrylsäure, Methacrylsäure und/oder den Estern von Acrylsäure und/oder Methacrylsäure auch weitere ethylenisch ungesättigte Monomere enthalten. Vorzugsweise sind die Monomere aus welchen die Poly(meth)acrylate erhalten werden monoethylenisch ungesättigte Monomere. Unter einem "Poly(meth)acrylat-Polyol" wird ein Poly(meth)acrylat verstanden, welches mindestens zwei Hydroxylgruppen enthält.

Anstelle oder zusätzlich zu den Poly(meth)acrylat-Polyolen können auch Polyester-Polyole eingesetzt werden. Hierbei ist ein Polyester-Polyol ein Polyester, der mindestens zwei Hydroxylgruppen trägt.

Bei einem gemeinsamen Einsatz von Poly(meth)acrylat-Polyolen und Polyester-Polyolen können beide Komponenten einzeln herstellt werden oder indem das Poly(meth)acrylat-Polyol in einer Polyester-Polyol-Komponente oder deren Lösung in geeignetem Lösemittel *in situ* polymerisiert wird.

Unter den polymeren Polyolen ganz besonders bevorzugt sind Polyacrylat-Polyole und/oder Polymethacrylat-Polyole sowie deren Mischpolymerisate. Diese können einstufig oder mehrstufig hergestellt werden. Sie können beispielsweise als statistische Polymere, Gradientencopolymere, Blockcopolymere oder Pfropfpolymere vorliegen.

Die erfindungsgemäß ganz besonders bevorzugten Poly(meth)acrylat-Polyole sind in der Regel Copolymerisate mit anderen vinylisch ungesättigten Monomeren und weisen vorzugsweise gewichtsmittlere Molekulargewichte M_{w} von 1000 bis 20000 g/mol, insbesondere von 1500 bis 10000 g/mol auf, jeweils gemessen mittels Gelpermeationschromatographie (GPC) gegen einen Polystyrolstandard.

Die Glasübergangstemperatur der Poly(meth)acrylat-Polyole liegt in der Regel zwischen -100 und 100 °C, insbesondere zwischen -50 und 80 °C (gemessen mittels DSC-Messungen, wie oben angegeben).

Die Poly(meth)acrylat-Polyole weisen bevorzugt eine OH-Zahl von 60 bis 250 mg KOH/g, insbesondere 70 bis 200 KOH/g und besonders bevorzugt 120 bis 180 mg KOH/g auf. Ihre Säurezahl beträgt vorzugsweise 0 bis 30 mg KOH/g.

Die Hydroxylzahl gibt an, wieviel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Die Säurezahl gibt hierin die Anzahl der mg Kaliumhydroxid an, die zur Neutralisation von 1 g der jeweiligen Verbindung verbraucht wird (DIN EN ISO 2114).

Als hydroxylgruppenhaltige Monomerbausteine der Poly(meth)acrylat-Polyole werden bevorzugt ein oder mehrere Hydroxyalkyl(meth)acrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat, eingesetzt. Insbesondere lassen sich auch durch die industrielle Herstellung bedingte Gemische vorteilhaft einsetzen. So besteht beispielsweise industriell hergestelltes Hydroxypropylmethacrylat aus etwa 20 - 30% 3-Hydroxypropylmethacrylat und 70 - 80% 2-Hydroxypropylmethacrylat.

Als weitere Monomerbausteine werden für die Synthese der Poly(meth)acrylat-Polyole bevorzugt Alkyl(meth)acrylate eingestetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Synthese der Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Geeignete Polyester-Polyole sind beispielsweise in EP-A-0 994 117 und EP-A-1 273 640 beschrieben. Insbesondere lassen sich geeignete Polyester-Polyole wie dem Durchschnittsfachmann bekannt ist durch Polykondensation aus Polyolen und Polycarbonsäuren oder deren Anhydriden erhalten.

Als in der Polykondensationsreaktion einsetzbares Polyol oder einsetzbare Polyolmischung eignen sich insbesondere mehrwertige Alkohole bzw. deren Mischungen, wobei die Alkohole wenigstens zwei, vorzugsweise wenigstens drei Hydroxylgruppen aufweisen. Bevorzugt enthält die eingesetzte Polyolmischung oder ist das eingesetzte Polyol wenigstens ein höherfunktionelles Polyol, das wenigstens drei Hydroxylgruppen aufweist. Geeignete höherfunktionelle Polyole mit wenigstens drei Hydroxylgruppen sind vorzugsweise ausgewählt aus der Gruppe bestehend aus Trimethylolpropan (TMP), Trimethylolethan (TME), Glycerin, Pentaerythrit, Zuckeralkoholen, Ditrimethylolpropan, Dipentaerythrit, Diglycerin, Trishydroxyethylisocyanurat und Mischungen davon. In einer speziellen Ausführungsform besteht das zur Herstellung der Polyester-Polyole eingesetzte Polyol nur aus höherfunktionellen Polyolen mit mehr als drei Hydroxylgruppen. In einer weiteren speziellen Ausführungsform enthält die zur Herstellung der Polyester-Polyole eingesetzte Polyolmischung wenigstens ein höherfunktionelles Polyol mit mindestens drei Hydroxylgruppen und wenigstens ein Diol. Geeignete Diole sind zum Beispiel Ethylenglykol, Propylenglykol, Butandiol-1,4, Pentandiol-1,5, Hexandiol-1,6, Neopentylglykol, 2-Butyl-2-ethyl-propandiol-1,3, Diethylenglykol, Dipropylenglykol, höhere Polyetherdiole, Dimethylolcyclohexan, und Mischungen der vorgenannten Diole.

Zur Herstellung der Polyester-Polyole geeignete Polycarbonsäuren oder deren Anhydride sind beispielsweise Phthalsäure, Phthalsäureanhydrid, Isophthalsäure, Terephthalsäure, Trimellithsäure, Trimellithsäureanhydrid, Pyromellithsäure, Pyromellithsäuredianhydrid, Tetrahydrophthalsäure, 1,2-, 1,3- oder 1,4-Cyclohexandicarbonsäure, 1,2-Cyclohexandicarbonsäureanhydrid, Tricyclodecandicarbonsäure, Bernsteinsäure, Glutarsäure, Adipinsäure, Pimelinsäure, Korksäure, Azelainsäure, Sebacinsäure, Maleinsäure, Maleinsäureanhydrid, Fumarsäure, Itaconsäure, Mesaconsäure, Citraconsäure, Dimerfettsäuren und Mischungen davon. In einer bevorzugten Ausführungsform werden zur Herstellung der in der vorliegenden Erfindung eingesetzten Polyester-Polyole ausschließlich Polycarbonsäuren der nachfolgend genannten Klasse 1 eingesetzt. Die Klasse 1 besteht aus Phthalsäure, Phthalsäureanhydrid, Isophthalsäure, Terephthalsäure, Trimellithsäure, Trimellithsäureanhydrid, Pyromellithsäure, Pyromellithsäuredianhydrid, Tetrahydrophthalsäure, Tetrahydrophthalsäureanhydrid, Hexahydrophthalsäure, Hexahydrophthalsäureanhydrid und Mischungen davon.

In einer weiteren bevorzugten Ausführungsform werden zur Herstellung der in der vorliegenden Erfindung eingesetzten Polyester-Polyole mindestens 50 Gew.-%, bezogen auf das Gesamtgewicht der Polycarbonsäure-Komponente an Polycarbonsäuren oder deren Anhydriden aus Klasse 1 eingesetzt. Nach dieser Ausführungsform besteht die Polycarbonsäure-Komponente zu höchstens 50 Gew.-%, bezogen auf ihr Gesamtgewicht, aus wenigstens einer Polycarbonsäure der nachfolgend aufgeführten Klasse 2 bestehend aus Bernsteinsäure, Glutarsäure, Adipinsäure, Pimelinsäure, Korksäure, Azelainsäure, Sebacinsäure, Dimerfettsäuren und Mischungen davon. Nach dieser Ausführungsform kann die Polycarbonsäure-Komponente neben wenigstens einer Polycarbonsäure der Klasse 1 und gegebenenfalls wenigstens einer Polycarbonsäure der Klasse 2, zusätzlich noch bis zu höchstens 10 Gew.-% wenigstens einer Polycarbonsäure der Klasse 3 bestehend aus Maleinsäure, Maleinsäureanhydrid, Fumarsäure, Itaconsäure, Mesaconsäure, Citraconsäure und Mischungen davon, enthalten.

Geeignete Polyurethan-Polyole werden wie dem Durchschnittsfachmann bekannt vorzugsweise durch Umsetzung von Polyesterpolyol-Präpolymeren - zum Beispiel auch solchen der oben genannten Art - mit geeigneten Di- oder Polyisocyanaten hergestellt und sind beispielsweise in der EP-A-1 273 640 beschrieben.

Geeignete Polysiloxan-Polyole sind beispielsweise in der WO-A-01/09260 beschrieben, wobei die dort angeführten Polysiloxan-Polyole bevorzugt in Kombination mit weiteren Polyolen, insbesondere solchen mit höheren Glasübergangstemperaturen, zum Einsatz kommen.

Sind in der erfindungsgemäßen Beschichtungsmittelzusammensetzung noch weitere Bindemittel, außer den unter den Begriff der polymeren Polyole (a) subsumierbaren Bindemittel enthalten, so können diese mit den anderen Komponenten des Beschichtungsmittels reagieren oder aber gegenüber diesen chemisch inert sein.

Bevorzugte physikalisch trocknende, das heißt chemisch gegenüber den anderen Lackbestandteilen inerte Bindemittel sind zum Beispiel, Celluloseacetobutyrat ("CAB"), Polyamide oder Polyvinylbutyral.

Die Vernetzer der Komponente (b) können blockierte oder unblockierte Polyisocyanate sein. Vorzugsweise handelt es sich hierbei um blockierte oder unblockierte aliphatische oder cycloaliphatische Polyisocyanate mit mindestens zwei Isocyanatgruppen in blockierter oder unblockierter Form. Aromatische Polyisocyanate sind aufgrund der Vergilbungsneigung der damit hergestellten Überzüge weniger geeignet, wenngleich nicht ausgeschlossen. Besonders bevorzugt besitzen die Polyisocyanate mindestens drei freie oder blockierte Isocyanatgruppen. In Beschichtungszusammensetzungen, die in der Automobilserienlackierung eingesetzt werden sind üblicherweise blockierte Polyisocyanate im Einsatz. In der Automobilreparaturlackierung werden vorzugsweise die bei niedrigeren Temperaturen bereits reagierenden Polyisocyanate mit freien Isocyanatgruppen eingesetzt.

Unter "aliphatischen unblockierten Polyisocyanaten" der Komponente (b) werden Verbindungen mit mindestens zwei freien, vorzugsweise mindestens drei freien, das heißt bei Raumtemperatur (25 °C) nicht blockierten Isocyanatgruppen im Molekül verstanden. Unter dem Begriff werden auch Dimere, Trimere und Polymere der aliphatischen Polyisocyanate verstanden. Beispiele hierfür sind Dimere, Trimere und Polymere von Hexamethylendiisocyanat (HDI), so beispielsweise dessen Uretdione und insbesondere dessen Isocyanurate.

Ganz besonders bevorzugt werden als aliphatische unblockierte Polyisocyanate die Trimere des HDI, wie sie beispielsweise als Basonat HI 100 von der BASF SE (Ludwigshafen, Deutschland), als Desmodur ® N 3300 und Desmodur ® XP 2410 von der Bayer Material Science AG (Leverkusen, Deutschland), oder als Tolonate ® HDT und HDB von Perstorp AB in Perstorp, Schweden, sowie ähnliche Produkte der Asahi Kasei Chemicals, Kawasaki, Japan, Handelsnamen Duranate® TLA, Duranate® TKA oder Duranate® MHG erhältlich sind, eingesetzt.

Das erfindungsgemäße Beschichtungsmittel kann auch cycloaliphatische Polyisocyanate, wie insbesondere Isophorondiisocyanat (IPDI) oder Cyclohexan(bis-alkylisocyanat) sowie deren Dimere, Trimere und Polymere enthalten.

Wie oben bereits erwähnt, ist der Einsatz aromatischer Polyisocyanate hingegen weniger bevorzugt, da Beschichtungen, die aus Beschichtungsmittel erhalten werden, die aromatische Polyisocyanate enthalten, zur Vergilbung neigen. Daher werden in einer besonders bevorzugten Ausführungsform der Erfindung keine aromatischen Polyisocyanate im Beschichtungsmittel eingesetzt.

Die unblockierten Polyisocyanate können jedoch auch blockiert werden und dann als blockierte Polyisocyanate eingesetzt werden. Als Blockierungsmittel eignen sich insbesondere die aus der US-A-4,444,954 bekannten:
a) Phenole wie Phenol, Cresol, Xylenol, Nitrophenol, Chlorophenol, Ethylphenol, t- Butylphenol, Hydroxybenzoesäure, Ester dieser Säure oder 2,5-di-tert.-Butyl-4-hydroxytoluol;
b) Lactame, wie epsilon-Caprolactam, delta-Valerolactam, gamma-Butyrolactam oder beta-Propiolactam;
c) aktive methylenische Verbindungen, wie Diethylmalonat, Dimethylmalonat, Acetessigsäureethyl- oder -methylester oder Acetylaceton;
d) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
e) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
f) Säureamide wie Acetoanilid, Acetoanisidinamid, Acrylamid, Methacrylamid, Essigsäureamid, Stearinsäureamid oder Benzamid;
g) Imide wie Succinimid, Phthalimid oder Maleimid;
h) Amine wie Diphenylamin, Phenylnaphthylamin, Xylidin, N-Phenylxylidin, Carbazol, Anilin, Naphthylamin, Butylamin, Dibutylamin oder Butylphenylamin;
i) Imidazole wie Imidazol oder 2-Ethylimidazol;
j) Harnstoffe wie Harnstoff, Thioharnstoff, Ethylenharnstoff, Ethylenthioharnstoff oder 1,3-Diphenylharnstoff;
k) Carbamate wie N-Phenylcarbamidsäurephenylester oder 2-Oxazolidon;
l) Imine wie Ethylenimin;
m) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
n) Salze der schwefeligen Säure wie Natriumbisulfit oder Kaliumbisulfit;
o) Hydroxamsäureester wie Benzylmethacrylohydroxamat (BMH) oder Allylmethacrylohydroxamat; oder
p) substituierte Pyrazole wie 3,5- oder 3,4-Dimethylpyrazol, oder Triazole.

Als Vernetzungsmittel können auch Aminoplastharze eingesetzt werden, wie sie beispielsweise in Römpp Lexikon Lacke und Druckfarben, Georg Thieme Verlag, 1998, Seite 29, "Aminoharze", dem Lehrbuch "Lackadditive" von Johan Bieleman, Wiley-VCH, Weinheim, New York, 1998, Seiten 242 ff., dem Buch "Paints, Coatings and Solvents", Zweite vollständig überarbeitete Auflage, Edit. D. Stoye und W. Freitag, Wiley-VCH, Weinheim, New York, 1998, Seiten 80 ff., den Schriften US 4 710 542 A1 oder EP-B-0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden.

Schließlich sind als Vernetzungsmittel auch Tris(alkoxycarbonylamino)triazin (TACT) und dessen Derivate einsetzbar. TACT und dessen Derivate sind beispielsweise in US 5084541, US 4939213, US 5288865, US 4710542 und den EP-Anmeldungen EP-A-0565774, EP-A-0541966, EP-A-0604922 und der EP-B- 0245700 beschrieben. Durch den vorzugsweise zusätzlichen Einsatz dieser Vernetzungsmittel wird eine besonders gute Chemikalienfestigkeit erreicht, die sich in besonderer Weise in guten Ergebnissen bei der Freibewitterung nach dem Jacksonville/Florida-Test zeigt.

Alle Vernetzungsmittel können alleine oder in Kombination miteinander eingesetzt werden.

Erfolgt eine Härtung der Beschichtungsmittelzusammensetzungen bei Temperaturen oberhalb 100 °C, wie beispielsweise 120 bis 180 °C, so werden vorzugsweise blockierte Polyisocyanate, Aminoplastharze und/oder TACT sowie dessen Derivate eingesetzt. Vorgenannte Vernetzer werden daher zumeist in der Automobilserienlackierung eingesetzt. Ist eine Härtung bei Raumtemperatur (25 °C) bis 100 °C oder darunter erwünscht, so werden vornehmlich unblockierte Polyisocyanate als Vernetzungsmittel eingesetzt.

In untergeordneten Mengen können auch von den oben genannten Vernetzern (b) verschiedene Vernetzer eingesetzt werden. Hierbei sind insbesondere solche vorteilhaft, die im gleichen Temperaturbereich Härtungsreaktionen mit den Bindemitteln eingehen, wie die gewählten Vernetzungsmittel. Als derartige Vernetzer sind beispielsweise Silylgruppen-haltige Komponenten wie sie in WO 2008/074489, WO 2008/074490, WO 2008/074491 genannt werden, geeignet.

Erhältlich sind die Glyceroldiester der oben angegebenen Formel (I) durch Umsetzung einer Verbindung der allgemeinen Formel (II) 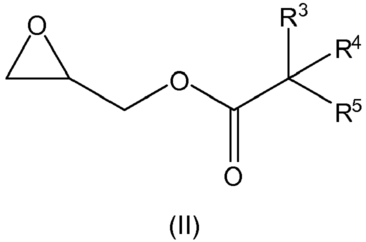 mit einer Verbindung der allgemeinen Formel (III)

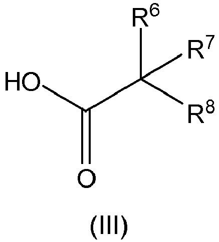

Die Umsetzung erfolgt durch ringöffnende Addition der COOH-Gruppe der Verbindung der Formel (III) an die Epoxygruppe der Verbindung der Formel (II).

Die Ringöffnung kann unter Bildung einer primären Hydroxylgruppe oder einer sekundären Hydroxylgruppe erfolgen. Wird eine primäre Hydroxylgruppe erhalten, so ist in den Verbindungen der allgemeinen Formel (I) R¹ = Wasserstoff und der Rest R² ein Rest der Formel O=C-C(R⁶)(R⁷)(R⁸). Bei Erhalt einer sekundären Hydroxylgruppe ist in den Verbindungen der allgemeinen Formel (I) R² = Wasserstoff und R¹ ein Rest der Formel O=C-C(R⁶)(R⁷)(R⁸).

In der Regel entstehen als Reaktionsprodukt Mischungen aus Verbindungen der allgemeinen Formel (I), wobei ein Teil der Produkte primäre Hydroxylgruppen trägt und der andere Teil sekundäre Hydroxylgruppen aufweist. Das Verhältnis primärer zu sekundärer Hydroxylgruppen lässt sich durch die Reaktionsbedingungen, insbesondere die Reaktionstemperatur und den Einsatz von Katalysatoren beeinflussen. Ohne Einsatz eines Katalysators überwiegt in der Regel der Anteil an Verbindungen mit primären Hydroxylgruppen. Beim Einsatz von beispielsweise Ethyltriphenylphosphoniumiodid als Katalysator kann das Verhältnis sekundär zu primär erhöht werden.

Durch Steuerung des Verhältnisses von primären zu sekundären Hydroxylgruppen ist es möglich die Reaktivität des Glyceroldiesters (c) in einem gewissen Umfang zu beeinflussen. Da primäre Hydroxylgruppen enthaltende Verbindungen der allgemeinen Formel (I) im Allgemeinen schneller reagieren als solche mit sekundären Hydroxylgruppen, lässt sich durch die Reaktionsführung bei der Herstellung der Verbindungen der allgemeinen Formel (I) deren Reaktivität, beispielsweise gegenüber Isocyanatgruppen, steuern. Diese vorteilhafte Flexibilität des Verfahrens eröffnet die Möglichkeit maßgeschneiderte Glyceroldiester zu erhalten und so die Topfzeit der Beschichtungsmittel, welche die Glyceroldiester enthalten, zu beeinflussen.

Die Verbindungen der allgemeinen Formel (II) lassen sich beispielsweise durch Umsetzung von Epichlorhydrin mit einer Carbonsäure R³R⁴R⁵C-COOH wie in EP 1 115 714 B1 (Beispiel 1) beschrieben, erhalten. Ein besonders bevorzugt einsetzbares Umsetzungsprodukt, welches unter die allgemeine Formel (II) fällt, ist der unter der Handelsbezeichnung Cardura® E10 erhältliche Glycidylester der Versatic®-Säure.

Carbonsäuren R³R⁴R⁵C-COOH und somit auch Carbonsäuren der analog definierten allgemeinen Formel (III) sind käuflich erhältlich. Unter diesen besonders bevorzugt sind die unter der Bezeichnung Versatic®-Säuren bekannten stark verzweigten, gesättigten Monocarbonsäuren mit längeren Seitenketten und tertiären COOH-Gruppen, die beispielsweise durch Kochsche Carbonsäuresynthese aus Olefinen, Kohlenmonoxid und Wasser entstehen. Ganz besonders bevorzugt ist unter diesen die Neodecansäure. Weitere besonders bevorzugte Vertreter sind beispielsweise die 2-Propylheptansäure und die iso-Decansäure.

Die Glyceroldiester lassen sich beispielsweise herstellen indem die Verbindungen der allgemeinen Formeln (II) und (III) in einem Lösemittel vorgelegt werden und auf eine Temperatur im Bereich von 100 bis 160 °C erhitzt werden. Bei Verwendung leicht siedender Lösemittel kann die Reaktion unter erhöhtem Druck durchgeführt werden. Der Reaktionsfortschritt wird mittels Bestimmung der Säurezahl verfolgt. Als Lösemittel geeignet sind beispielsweise aromatische Kohlenwasserstoffe wie Xylol, Toluol, Solvent Naphtha, Ester wie Butylacetat, Pentylacetat, Etherester wie z. B. Methoxypropylacatat, Ethoxiethylpropionat, Ketone wie Methylethylketon, Methylisoamylketon und Methylisobutylketon. Die so erhaltenen Glyceroldiester können dann, sofern erwünscht nach (teilweiser) Abtrennung des Lösemittels, in den erfindungsgemäßen Beschichtungsmittelzusammensetzungen eingesetzt werden.

Die Glyceroldiester können jedoch auch *in-situ*, das heißt ohne deren Isolierung, vor oder während der Synthese der polymeren Polyole (a), insbesondere des hydroxylgruppenhaltigen Poly(meth)acrylats gebildet werden. Dies kann beispielsweise durch Vorlegen der Verbindungen der allgemeinen Formeln (II) und (III) in einem geeigneten Lösemittel, Erhitzen auf eine Temperatur von beispielsweise 80 bis 180°C, zum Beispiel 160 °C und nachfolgendem Zudosieren der das polymere Polyol (a) bildenden Monomere und Katalysatoren erfolgen. Geeignete Katalysatoren sind, sofern es sich beim polymeren Polyol (a) um ein hydroxylgruppenhaltiges Poly(meth)acrylat handelt, beispielsweise Peroxidkatalysatoren, wie zum Beispiel Di-tert.-Butylperoxid (DTBP). Bei dieser Ausführungsform können nur Monomermischungen eingesetzt werden, die nur untergeordnete Anteile (< 10 Gew.-% bezogen auf das Gesamtgewicht aller Monomere) an Säure- bzw. Epoxidfunktionellen Monomeren beinhalten. Die Reaktionsführung kann unter Normaldruck oder Überdruck erfolgen. Der Reaktionsmischung können vor, während oder nach der Polymerisation geeignete Lösemittel zugesetzt werden, um einerseits die Polymerisationreaktion, andererseits die resultierende Viskosität zu beeinflussen. Vor, während oder nach der Polymerisation können geringe Mengen (0,01 - 2,0 Gew.-% bezogen auf die Gesamtmenge des festen Polymers) eines geeigneten Reduktionsmittels zugesetzt werden, um besonders helle Harzlösungen zu erhalten. Als Reduktionsmittel kommen bevorzugt Alkylphosphite zum Einsatz, besonders bevorzugt wird Triisodecylphosphit eingesetzt.

Die Glyceroldiester-Komponente (c) ist in den erfindungsgemäßen Beschichtungsmittelzusammensetzungen vorzugsweise in einer Menge von 2 bis 20 Gew.-%, besonders bevorzugt in einer Menge von 3 bis 18 Gew.-%, ganz besonders bevorzugt in einer Menge von 5 bis 15 Gew.-% oder besser noch 8 bis 15 Gew.-%, bezogen auf das Gesamtgewicht der Komponenten (a) und (c) in der Beschichtungsmittelzusammensetzung enthalten. Liegt der Anteil der Glyceroldiester-Komponente (c) unterhalb 2 Gew.-% bezogen auf das Gesamtgewicht der Komponenten (a) plus (c), so ist die erfindungsgemäße Wirkung meist gering. Liegt der Anteil der Glyceroldiester-Komponente (c) oberhalb 20 Gew.-% bezogen auf das Gesamtgewicht der Komponenten (a) plus (c), so resultieren daraus häufig unzureichend vernetzte Filme die mangelnde Beständigkeiten besitzen.

Neben den zwingend im Beschichtungsmittel enthaltenen Komponenten (a), (b) und (c) können, wie oben bereits erwähnt, weitere von diesen verschiedene Vernetzer, Bindemittel, Reaktivverdünner oder lacktypische Lösemittel im Beschichtungsmittel enthalten sein.

Darüber hinaus können die Beschichtungsmittel auch weitere von den Komponenten (a), (b) und (c) verschiedene lacktypische Additive, wie beispielsweise die Vernetzungsreaktion(en) katalysierende Katalysatoren, Lichtschutzmittel, Konservierungsmittel, Verlaufadditive, Antiablaufmittel (zum Beispiel sogenannte "Sag Control Agents"), Netzmittel, Mattierungsmittel, Farbstoffe, Pigmente oder Füllstoffe enthalten.

Vorzugsweise ist die erfindungsgemäße Beschichtungsmittelzusammensetzung ein Klarlack, das heißt sie ist frei beziehungsweise im Wesentlichen frei von nicht transparenten Pigmenten und Füllstoffen. Die erfindungsgemäße Beschichtungsmittelzusammensetzung kann jedoch auch als Füller oder Basislack eingesetzt werden.

Besonders bevorzugt wird die erfindungsgemäße Beschichtungsmittelzusammensetzung bei einer Mehrschichtlackierung als oberste Lackschicht eingesetzt. Ganz besonders bevorzugt wird sie in der Automobilkarosserielackierung als Klarlackschicht aufgebracht.

Die erfindungsgemäßen Zusammensetzungen können bereits bei niedrigen Temperaturen (in der Regel bereits unter 100°C wie beispielsweise 60°C) chemisch härten, wenn diese mindestens einen gegenüber Komponente (a) und/oder (c) bei diesen Temperaturen reaktiven Vernetzer (b) wie beispielsweise ein unblockiertes Polyisocyanat enthalten. Solche Zusammensetzungen sind ganz besonders bevorzugt in der Automobilreparaturlackierung einsetzbar.

Der Einsatz blockierter Polyisocyanate, Aminoplast-Vernetzer und/oder TACT bzw. dessen Derivaten erfolgt hingegen üblicherweise in der Automobilserienlackierung, wo deutlich höhere Härtungstemperaturen wie beispielsweise 120 bis 180 °C, vorzugsweise 140 bis 160 °C vorherrschen.

Die erfindungsgemäße Beschichtungsmittelzusammensetzung wird beim Einsatz freier Polyisocyanate als Vernetzer (b) vorzugsweise erst kurz vor deren Applikation durch Mischen der Komponenten hergestellt, da eine Vernetzungsreaktion zwischen den freien Isocyanatgruppen des aliphatischen Polyisocyanats (b) und den im polymeren Polyol (a) und den im Glyceroldiester (c) vorhandenen Hydroxylgruppen bereits bei Raumtemperatur erfolgen kann. Im Allgemeinen unproblematisch ist eine Vorvermischung der polymeren Polyole (a) mit dem oder den Glyceroldiestern (c). In jedem Fall sollten die gegenüber einander reaktiven Bestandteile der Beschichtungsmittelzusammensetzung erst kurz vor der Applikation des Beschichtungsmittels vermischt werden, um eine möglichst lange Verarbeitbarkeit zu gewährleisten. Man spricht in einem solchen Fall von einem 2-Komponenten-Beschichtungsmittel (2K-Lack).

In der Automobilserienlackierung werden die erfindungsgemäßen Beschichtungsmittelzusammensetzungen vorzugsweise als 1-Komponenten-Beschichtungsmittel (1K-Lack) bereit gestellt. Dies bedeutet, dass die Komponenten, beispielsweise durch eine Blockierung der Isocyanatgruppen nicht vorzeitig miteinander reagieren.

Weiterer Gegenstand der vorliegenden Erfindung ist eine Mehrschichtlackierung die mindestens zwei Schichten, vorzugsweise mindestens drei Schichten umfasst. Die Schichten sind auf einem grundierten oder ungrundierten Substrat angeordnet, wobei die oberste Schicht der Schichten aus einer erfindungsgemäßen Beschichtungsmittelzusammensetzung gebildet ist. Ist das Substrat grundiert, so ist die Grundierung vorzugsweise eine Elektrotauchlackgrundierung, insbesondere eine kathodische Elektrotauchlackierung. Der Grundierung kann eine weitere Vorbehandlung insbesondere eine Phosphatierung vorangehen.

Auf dem grundierten oder ungrundierten Substrat kann beispielsweise ein herkömmliches Füllerbeschichtungsmittel aufgebracht sein. Auf dem Füllerbeschichtungsmittel - sofern dieses vorhanden ist - können ein oder mehrere Basislackierungen aufgebracht werden. Im Falle der Automobilreparaturlackierung kann es sich rein um physikalisch trocknende Basislackierungen oder thermisch, mittels eines Vernetzers härtende Basislackierungen handeln oder solche die thermisch und aktinisch oder nur aktinisch härten und in der Automobilserienlackierung insbesondere um thermisch vernetzende Zusammensetzungen. Es besteht auch die Möglichkeit Füllerbeschichtungsmittel mit den Eigenschaften einer Basislackierung auszustatten oder umgekehrt eine Basislackierung mit Füllereigenschaften, so dass es ausreichen kann nur eine Füllerschicht oder nur eine Basislackschicht aufzubringen. Üblicherweise wird ein Füllerbeschichtungsmittel als Füllerschicht und mindestens eine Basislackzusammensetzung als Basislackschicht aufgebracht. Als Füllerbeschichtungsmittel und als Basislackzusammensetzung eignen sich alle handelsüblichen Füller oder Basislacke, insbesondere solche, wie sie in der Automobilserien- oder der Automobilreparaturlackierung eingesetzt werden. Als letzte Schicht ist schließlich eine erfindungsgemäße Beschichtungszusammensetzung als Decklack, vorzugsweise als transparenter Decklack (Klarlack) aufgebracht.

Weiterer Gegenstand der Erfindung ist dementsprechend auch ein Verfahren zur Herstellung einer erfindungsgemäßen Mehrschichtlackierung, umfassend die Schritte:
(i) Aufbringen eines Füllerbeschichtungsmittels auf ein unbehandeltes oder vorbehandeltes Substrat und/oder
(ii) Aufbringen mindestens einer Basislackzusammensetzung darauf und anschließendes
(iii) Aufbringen mindestens einer erfindungsgemäße Beschichtungsmittelzusammensetzung, insbesondere als Decklackzusammensetzung, vorzugsweise als Klarlack, gefolgt von einer
(iv) Härtung der Mehrschichtlackierung bei einer Temperatur bis maximal 180 °C, vorzugsweise bei einer Temperatur von
   (1) bis zu maximal 100 °C, sofern das Vernetzungsmittel (b) ein unblockiertes Polyisocyanat ist, oder
   (2) von 120 °C bis 180 °C, sofern das Vernetzungsmittel (b) mindestens ein blockiertes Polyisocyanat, einen Aminoplast-Vernetzer oder TACT enthält.

In einer besonderen Ausführungsform ist das Substrat in Schritt (i) ein vorbehandeltes metallisches Substrat und die Vorbehandlung umfasst eine Phosphatierung und/oder kathodische Elektrotauchlackierung, In einer weiteren besonderen Ausführungsform ist das Substrat in Schritt (i) ein Kunststoffsubstrat.

In einer weiteren Ausführungsform des erfindungsgemäßen Verfahrens zur Herstellung einer Mehrschichtlackierung wird in Schritt (iii) eine erfindungsgemäße Beschichtungszusammensetzung eingesetzt, die als Komponente (a) mindestens ein Poly(meth)acrylat-Polyol oder Polyester-Polyol enthält.

In einer weiteren Ausführungsform des erfindungsgemäßen Verfahrens zur Herstellung einer Mehrschichtlackierung wird in Schritt (iii) eine Beschichtungszusammensetzung eingesetzt, bei welcher es sich um einen Klarlack handelt.

Als Füllerbeschichtungsmittel und Basislackzusammensetzung können herkömmliche, d.h. handelsübliche Füller und Basislacke eingesetzt werden. Insbesondere sind solche geeignet wie sie in der Automobilserien- bzw. Automobilreparaturlackierung eingesetzt werden.

Das Aufbringen der einzelnen Schichten erfolgt nach den üblichen, dem Durchschnittsfachmann geläufigen Lackierverfahren. Vorzugsweise werden die Zusammensetzungen bzw. Beschichtungsmittel der Schritte (i), (ii) und (iii) durch Sprühen pneumatisch und/oder elektrostatisch aufgebracht.

Die Schritte (i), (ii) und (iii) erfolgen vorzugsweise Nass-in-Nass. Vor dem Aufbringen der Basislackzusammensetzung oder Basislackzusammensetzungen kann der Füller nur bei Raumtemperatur abgelüftet werden oder jedoch auch bei erhöhter Temperatur von vorzugsweise maximal 100 °C, besonders bevorzugt 30 bis 80 °C und ganz besonders bevorzugt 40 bis 60 °C getrocknet werden. Eine Trocknung kann auch durch IR-Bestrahlung erfolgen.

Was für die Füllerlackierung hinsichtlich des Ablüftens und/oder Trocknens und der diesbezüglichen Trocknungstemperaturen gilt, das gilt in gleicher Weise für die Basislackschicht beziehungsweise Basislackschichten.

Anstelle eines Naß-in-Naß-Auftrags ist auch eine Härtung der Füller- und/oder Basislack-Schicht(en) vor dem Auftrag der Schicht in Schritt (iii) möglich. Die herkömmlichen Füller und/oder Basislacke lassen sich üblicherweise thermisch, mit aktinischer Strahlung oder kombiniert thermisch und mit aktinischer Strahlung härten.

Die Härtung der in Schritt (iii) aufgebrachten erfindungsgemäßen Beschichtungsmittelzusammensetzung erfolgt bei Temperaturen bis maximal 180 °C, besonders bevorzugt bei Temperaturen von Raumtemperatur bis maximal 160 °C, und ganz besonders bevorzugt bei Temperaturen von 140 °C bis 160°C für die Automobilserienlackierung. Für die Automobilreparaturlackierung wird die Härtung gewöhnlich bei Raumtemperatur (25°C) bis 80 °C, vorzugsweise bis maximal 60 °C durchgeführt. Der Härtung kann auch ein Ablüften vorangehen.

Ein weiterer Gegenstand der vorliegenden Erfindung ist ein Substrat, auf dem eine erfindungsgemäße Mehrschichtlackierung aufgebracht ist.

Als Substratmaterial eignen sich insbesondere metallische Substrate, wie beispielsweise Automobilkarosserien oder Automobilkarosserieteile, aber auch Kunststoffsubstrate, wie sie insbesondere bei der 2-Komponenten-Serienlackierung von Kunststoffteilen eingesetzt werden.

Im Folgenden soll die Erfindung anhand von Beispielen illustriert werden.

### BEISPIELE

Für die Durchführung der folgenden Experimente wurden Reagentien und Lösemittel in technischer Reinheit von verschiedenen Herstellern eingesetzt. Cardura ® E10 und Versaticsäure wurden von der Firma Hexion (Louvain-la-Neuve, Belgien) bezogen. Zur Durchführung der Größenausschluß GPC wurde die "Isocratic Mode Pump Waters 515" und die Säulen HR5E (linear) und HR2 (500) in Reihe eingesetzt (Firma Waters, Eschborn, Deutschland und PSS Polymer Standard Services Mainz, Deutschland). Als Polystyrolstandard diente "Calibration Polystyrene PS2" der Firma Polymer Laboratories (Darmstadt, Deutschland) (580 bis 377400 Da). Die Viskosität nach Gardner wurde mit Standard Gardner Tubes (Firma Byk Gardner, Geretsried, Deutschland) und die Brookfield-Viskosität mit dem Gerät CAP 2000 (Brookfield E.L.V. GmbH, Lorch, Deutschland) bestimmt. DOI-Messungen wurden mit dem Gerät Wave-Scan DOI 4816 der Firma Byk Gardner (Geretsried, Deutschland) durchgeführt.

### Beispiel 1: Herstellung eines erfindungsgemäß einsetzbaren Glyceroldiesters

Einem 5-Liter Reaktionsbehälter, ausgestattet mit einem mechanischen Rührer und Rückflußkühler, wurden 1241,1 g (7,25 mol) Versaticsäure und 1758,9 g (7,10 mol) Cardura ® E10 zugegeben. Es wurde bei einer Rührgeschwindigkeit von 150 Umdrehungen pro Minute auf 150 °C erhitzt. Der Reaktionsfortschritt wurde durch Bestimmung der Säurezahl verfolgt. Nach etwa einer Stunde war die Umsetzung vollständig abgeschlossen. Es wurden 3000 g einer klaren, leicht gelblichen Flüssigkeit erhalten. Die Viskosität nach Gardner betrug I-K. Die Viskosität nach Brookfield (Cone Plate 3, 200 Umdrehungen pro Minute, 23 °C) betrug ca. 325 mPas. Die Säurezahl betrug ca. 5 mg KOH/g. Die Farbzahl (APHA) betrug: 40. Das zahlenmittlere und gewichtsmittlere Molekulargewicht wurde mit GPC gegen einen Polystryrolstandard unter Nutzung eines Brechungsindexdetektors bestimmt und betrug: M_{w}: 450 Dalton und Mₙ: 430 Dalton. Das Verhältnis primärer OH-Gruppen zu sekundären OH-Gruppen im Zielprodukt betrug 1:1,27 (bestimmt mittels ¹H-NMR). Das heißt, es lag eine Mischung zweier Glyceroldiester vor (nach obiger Definition betrug der Anteil an Verbindungen mit R¹ = H 44 % und der Anteil der Verbindungen mit R² = H 56 %).

### Beispiel 2: Herstellung eines erfindungsgemäß einsetzbaren Glyceroldiesters (in-situ)

Zunächst wurde im Reaktionsgefäß, ausgestattet mit Rührer, Innenthermometer, 2 Tropftrichtern und Inertgaszufuhr eine Mischung aus Cardura ® E10 [CAS 26761-45-5], Versaticsäure [CAS 26896-20-8] und Solvent Naphta vorgelegt und unter Rühren auf 156 °C erhitzt.

Anschließend wurden bei 156°C simultan über einen Zeitraum von 4 Stunden eine Lösung von Di-tert.-Butylperoxid in Solvent Naphta sowie eine Mischung aus Methylmethacrylat, Styrol, Acrylsäure und Hydroxyethylmethacrylat zudosiert. Danach wurde über einen Zeitraum von weiteren 30 Minuten bei 156 °C eine weitere Lösung von Di-tert.-Butylperoxid in Solvent Naphta zugegeben, um eine vollständige Umsetzung der Monomeren zu gewährleisten. Die Reaktionsmischung wurde abgekühlt und mit Solvent Naphta und Butylacetat auf einen Festkörper von 54,8 % (1 g wurde 1 Stunde bei 110 °C getrocknet) verdünnt. Das erhaltene hydroxyfunktionelle Poly(meth)acrylat besitzt eine Säurezahl von 10,8 mg KOH/g, eine berechnete Hydroxylzahl von 140 mg KOH/g, ein zahlenmittleres Molekulargewicht Mₙ von 3701 g/mol (bestimmt mittels Gelpermeationschromatographie (GPC) gegen einen Polystyrolstandard) und ein gewichtsmittleres Molekulargewicht M_{w} von 6916 g/mol (bestimmt mittels GPC gegen einen Polystyrolstandard).

### Beispiel 3: Herstellung eines hydroxyfunktionellen Poly(meth)acrylats

Es wurde wie in Beispiel 2 vorgegangen, nur dass auf den Schritt der Umsetzung von Cardura ® E10 [CAS 26761-45-5] mit Versaticsäure [CAS 26896-20-8] in Solvent Naphta bei 156 °C ersatzlos verzichtet wurde.

Die Reaktionsmischung wurde abgekühlt und mit Solvent Naphta auf einen Festkörper von 53,8 % (1 g wurde 1 Stunde bei 110 °C getrocknet) verdünnt. Das erhaltene hydroxyfunktionelle Poly(meth)acrylat besitzt eine Säurezahl von 10,1 mg KOH/g, eine Hydroxylzahl von 138 mg KOH/g, ein zahlenmittleres Molekulargewicht Mₙ von 4277 g/mol (bestimmt mittels Gelpermeationschromatographie (GPC) gegen einen Polystyrolstandard) und ein gewichtsmittleres Molekulargewicht M_{w} von 7018 g/mol (bestimmt mittels GPC gegen einen Polystyrolstandard).

### Anwendungsbeispiele 1 (Vergleich) und 1A (erfindungsgemäß)

**Tabelle 1**

| | **Anwendungsbeispiel 1 (Gew.-Teile)** | **Anwendungsbeispiel 1A (Gew.-Teile)** |
|---|---|---|
| | | |
| **Zusammensetzung aus Beispiel 3** | 38,72 | |
| **Zusammensetzung aus Beispiel 2** | | 40,72 |
| Rheologiehilfsmittel auf Polyacrylatbasis (60%ig in Solvent Naphtha/Butylacetat) | 15,49 | 15,49 |
| Härtermischung auf Melaminharzbasis (75%ig in Butanol) | 10,0 | 10,0 |
| UV-Schutzagens | 0,18 | 0,18 |
| Additivlösung auf Basis modifizierter Polysiloxane | 5,93 | 5,93 |
| oberflächenaktives Mittel | 0,3 | 0,3 |
| Methylamylketon | 0,85 | 0,85 |
| Xylol | 13,15 | 16,03 |
| Butylalkohol | 3,31 | 3,31 |
| Butylglycolacetat | 2,0 | 2,0 |
| Butyldiglykolacetat | 4,5 | 4,5 |
| | | |
| Viskosität DIN 4-Becher, 23°C in Sekunden | 27" | 27" |
| Festkörper (2g, 90min bei 165°C) in % | 43,2 | 44,5 |

### Herstellung und Prüfung der Beschichtungen

Die Beurteilung des optischen Gesamteindrucks (Appearance) erfolgte nach elektrostatischen ESTA BOL Applikation der Beschichtungsmittel auf einem handelsüblichen Wasserbasislack (schwarz uni) der Firma BASF Coatings GmbH oder auf einen handelsüblichen Wasserbasislack silber metallic der Firma BASF Coatings GmbH. Danach wird die jeweils resultierende Beschichtung 5 Minuten bei Raumtemperatur abgelüftet und anschließend bei 140°C 22 Minuten eingebrannt. Die eingebrannten Lackfilme wurden mittels des Gerätes "Wave Scan" der Firma Byk - Gardner untersucht, wobei auf einer Strecke von 10 cm 1250 Messpunkte aufgenommen wurden. Die Reflektion wird vom Messgerät in Langwelligkeit ("Long Wave" = LW-Wert), d.h. die Varianz der Lichtintensität für Strukturen im Bereich von 0,6 mm bis 10 mm und in Kurzwelligkeit ("Short Wave = SW-Wert), d.h. die Varianz der Lichtintensität für Strukturen im Bereich von 0,1 mm bis 0,6 mm, unterteilt.

**Tabelle 2**

| | Exp. | Dicke (µm) | Long Wave | Short Wave | Distinctiveness of Image (DOI) |
|---|---|---|---|---|---|
| **Anwendungsbeispiel 1** | **I** | 42 | 3 | 6 | 84,5 |
| **Anwendungsbeispiel 1A** | **II** | 32 | 4 | 5 | 84,4 |
| | | | | | |
| **Anwendungsbeispiel 1** | **III** | 32 | 8 | 7 | 83,7 |

Die in Tabelle 2 dargestellten anwendungstechnischen Daten zeigen, dass die erfindungsgemäße Beschichtungsmittelzusammensetzung gemäß Anwendungsbeispiel 1A bei einer um etwa 20% geringeren Beschichtungsdicke (32 Mikrometer) (entsprechend Experiment II) hinsichtlich des optischen Erscheinungsbilds ("Appearance") in etwa gleich gute Werte liefert (Long Wave, Short Wave und "Distinctiveness of Image" (DOI)) wie eine Beschichtungsmittelzusammensetzung, die keinen Glyceroldiester enthält (Anwendungsbeispiel 2; gemäß Experiment I). Experiment III stellt eine Wiederholung des Experiments I dar, jedoch mit einer Schichtdicke von 32 Mikrometer. Das optische Erscheinungsbild ist deutlich schlechter als beim erfindungsgemäßen Beispiel (Experiment II).

## Patentansprüche

1. Beschichtungsmittelzusammensetzung, umfassend
(a) mindestens ein polymeres Polyol gewählt aus der Gruppe bestehend aus Poly(meth)acrylat-Polyolen, Polyester-Polyolen, Polyurethan-Polyolen und Polysiloxan-Polyolen,
(b) mindestens ein Vernetzungsmittel gewählt aus der Gruppe bestehend aus blockierten und unblockierten Polyisocyanaten, Aminoplast-Vernetzern und TACT und
(c) mindestens einen Glyceroldiester der allgemeinen Formel (I) 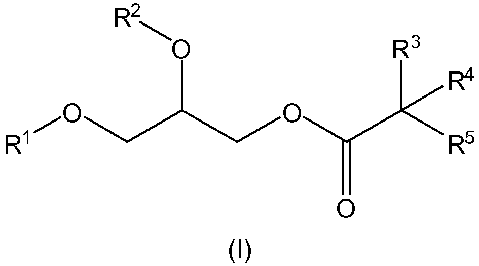 worin
einer der beiden Reste R¹ oder R² für Wasserstoff steht und der nicht für Wasserstoff stehende der beiden Reste R¹ und R² für einen Rest 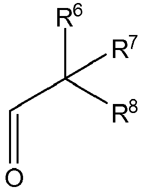 steht,
und
die Reste R³, R⁴, R⁵, R⁶, R⁷ und R⁸ unabhängig voneinander für Wasserstoff oder einen gesättigten, aliphatischen Rest mit 1 bis 20 Kohlenstoffatomen stehen,
mit der Maßgabe, dass die Reste R³, R⁴ und R⁵ gemeinsam mindestens 5 Kohlenstoffatome enthalten und die Reste R⁶, R⁷ und R⁸ gemeinsam mindestens 5 Kohlenstoffatome enthalten,

2. Beschichtungsmittelzusammensetzung gemäß Anspruch 1, wobei R¹ für Wasserstoff steht.

3. Beschichtungsmittelzusammensetzung gemäß Anspruch 1, wobei R² für Wasserstoff steht.

4. Beschichtungsmittelzusammensetzung gemäß einem der Ansprüche 1 bis 3, wobei die Reste R³, R⁴ und R⁵ gemeinsam 5 bis 11 Kohlenstoffatome enthalten und die Reste R⁶, R⁷ und R⁸ gemeinsam 5 bis 11 Kohlenstoffatome enthalten.

5. Beschichtungsmittelzusammensetzung gemäß einem der Ansprüche 1 bis 4, wobei Komponente (a) mindestens ein Poly(meth)acrylat-Polyol oder Polyester-Polyol enthält.

6. Beschichtungsmittelzusammensetzung gemäß einem der Ansprüche 1 bis 5, wobei Komponente (b) mindestens ein blockiertes oder unblockiertes Polyisocyanat enthält.

7. Beschichtungsmittelzusammensetzung gemäß einem der Ansprüche 1 bis 6, wobei es sich bei der Beschichtungsmittelzusammensetzung um einen Klarlack handelt.

8. Beschichtungsmittelzusammensetzung gemäß einem der Ansprüche 1 bis 7, wobei die Hydroxylzahl der Komponente (a) um nicht mehr als 50 % von der Hydroxylzahl der in der Beschichtungsmittelzusammensetzung eingesetzten Glyceroldiester-Komponente (c) abweicht und/oder der Anteil der Glyceroldiester-Komponente (c) 2 bis 20 Gew.-% bezogen auf das Gesamtgewicht der Komponenten (a) plus (c) beträgt.

9. Mehrschichtlackierung, die mindestens zwei Schichten umfasst, die auf einem Substrat angeordnet sind und die **dadurch gekennzeichnet ist, dass** die oberste Schicht der Schichten aus einer Beschichtungsmittelzusammensetzung gemäß einem oder mehreren der Ansprüche 1 bis 8 besteht.

10. Verfahren zur Herstellung einer Mehrschichtlackierung, umfassend die Schritte:
(i) Aufbringen eines Füllerbeschichtungsmittels auf ein unbehandeltes oder vorbehandeltes Substrat und/oder
(ii) Aufbringen mindestens einer Basislackzusammensetzung darauf und anschließendes
(iii) Aufbringen mindestens einer Beschichtungszusammensetzung nach einem oder mehreren der Ansprüche 1 bis 8, gefolgt von einer
(iv) Härtung der Mehrschichtlackierung bei einer Temperatur von
(1) bis zu maximal 100 °C, sofern das Vernetzungsmittel (b) ein unblockiertes Polyisocyanat ist, oder
(2) von 120 °C bis 180 °C, sofern das Vernetzungsmittel (b) mindestens ein blockiertes Polyisocyanat, einen Aminoplast-Vernetzer oder TACT enthält.

11. Verfahren zur Herstellung einer Mehrschichtlackierung gemäß Anspruch 10, wobei das Substrat in Schritt (i) ein vorbehandeltes metallisches Substrat ist und die Vorbehandlung eine Phosphatierung und/oder kathodische Elektrotauchlackierung umfasst oder das Substrat in Schritt (i) ein Kunststoffsubstrat ist.

12. Verfahren zur Herstellung einer Mehrschichtlackierung gemäß einem der Ansprüche 10 oder 11, wobei in Schritt (iii) eine Beschichtungszusammensetzung gemäß Anspruch 5 eingesetzt wird.

13. Verfahren zur Herstellung einer Mehrschichtlackierung gemäß einem der Ansprüche 10 bis 12, wobei in Schritt (iii) eine Beschichtungszusammensetzung gemäß Anspruch 7 eingesetzt wird.

14. Verfahren zur Herstellung einer Mehrschichtlackierung gemäß einem der Ansprüche 10 bis 13, wobei das Substrat in Schritt (i) eine Automobilkarosserie oder ein Teil einer Automobilkarosserie ist.

15. Substrat, **dadurch gekennzeichnet, dass** auf diesem eine Mehrschichtlackierung gemäß Anspruch 9 oder gemäß einem Verfahren nach einem der Ansprüche 10 bis 14 aufgebracht ist.

## Claims

1. Coating material composition comprising
(a) at least one polymeric polyol selected from the group consisting of poly(meth)acrylate polyols, polyester polyols, polyurethane polyols and polysiloxane polyols,
(b) at least one crosslinking agent selected from the group consisting of blocked and nonblocked polyisocyanates, amino resin crosslinkers, and TACT, and
(c) at least one glycerol diester of the general formula (I) 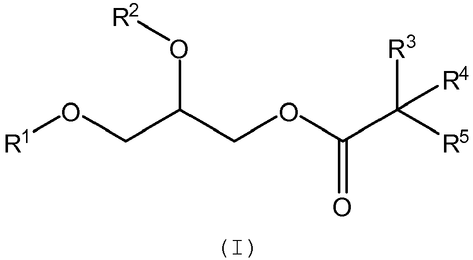 in which
one of the two radicals R¹ or R² is hydrogen and the radical of the two radicals R¹ and R² that is not hydrogen is a radical 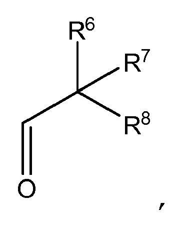 and
the radicals R³, R⁴, R⁵, R⁶, R⁷ and R⁸ independently of one another are hydrogen or a saturated, aliphatic radical having 1 to 20 carbon atoms,
with the proviso that the radicals R³, R⁴ and R⁵ together contain at least 5 carbon atoms and the radicals R⁶, R⁷ and R⁸ together contain at least 5 carbon atoms.

2. Coating material composition according to Claim 1, where R¹ is hydrogen.

3. Coating material composition according to Claim 1, where R² is hydrogen.

4. Coating material composition according to any of Claims 1 to 3, where the radicals R³, R⁴ and R⁵ together contain 5 to 11 carbon atoms and the radicals R⁶, R⁷ and R⁸ together contain 5 to 11 carbon atoms.

5. Coating material composition according to any of Claims 1 to 4, where component (a) comprises at least one poly(meth)acrylate polyol or polyester polyol.

6. Coating material composition according to any of Claims 1 to 5, where component (b) comprises at least one blocked or nonblocked polyisocyanate.

7. Coating material composition according to any of Claims 1 to 6, where the coating material composition is a clearcoat material.

8. Coating material composition according to any of Claims 1 to 7, where the hydroxyl number of component (a) differs by not more than 50% from the hydroxyl number of the glycerol diester component (c) used in the coating material composition, and/or the fraction of the glycerol diester component (c) is 2% to 20% by weight, based on the total weight of components (a) plus (c).

9. Multicoat paint system comprising at least two coats disposed on a substrate and being **characterized in that** the uppermost coat of the coats consists of a coating material composition according to one or more of Claims 1 to 8.

10. Method for producing a multicoat paint system, comprising the following steps:
(i) applying a primer-surfacer coating material to an untreated or pretreated substrate and/or
(ii) applying at least one basecoat composition thereto and subsequently
(iii) applying at least one coating composition according to one or more of Claims 1 to 8, followed by
(iv) curing of the multicoat paint system at a temperature of
(1) up to 100°C maximum, where the crosslinking agent (b) is a nonblocked polyisocyanate, or
(2) from 120°C to 180°C, where the crosslinking agent (b) comprises at least one blocked polyisocyanate, an amino resin crosslinker or TACT.

11. Method for producing a multicoat paint system according to Claim 10, where the substrate in step (i) is a pretreated metallic substrate and the pretreatment comprises a phosphatizing and/or cathodic electrodeposition coating treatment or the substrate in step (i) is a plastics substrate.

12. Method for producing a multicoat paint system according to either of Claims 10 and 11, where in step (iii) a coating composition according to Claim 5 is used.

13. Method for producing a multicoat paint system according to any of Claims 10 to 12, where in step (iii) a coating composition according to Claim 7 is used.

14. Method for producing a multicoat paint system according to any of Claims 10 to 13, where the substrate in step (i) is an automotive bodywork or a part of an automotive bodywork.

15. Substrate **characterized in that** applied thereto is a multicoat paint system according to Claim 9 or according to a method according to any of Claims 10 to 14.

## Revendications

1. Composition d'agent de revêtement, comprenant
(a) au moins un polyol polymère choisi dans le groupe constitué par les poly(méth)acrylate-polyols, les polyester-polyols, les polyuréthane-polyols et les polysiloxane-polyols,
(b) au moins un agent de réticulation choisi dans le groupe constitué par les polyisocyanates bloqués et non bloqués, les réticulants de type aminoplaste et la TACT (tris(alcoxycarbonylamino)triazine) et
(c) au moins un diester de glycérol de formule générale (I) 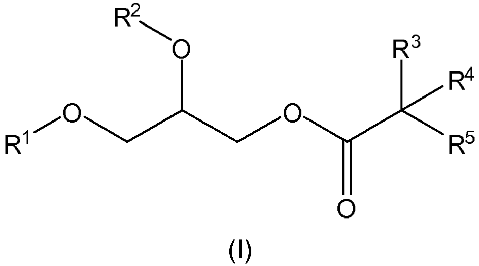 dans laquelle un des deux radicaux R¹ ou R² représente hydrogène et le radical ne représentant pas hydrogène parmi les deux radicaux R¹ et R² représente 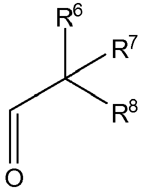 et les radicaux R³, R⁴, R⁵, R⁶, R⁷ et R⁸ représentent, indépendamment les uns les autres, hydrogène ou un radical saturé, aliphatique, comprenant 1 à 20 atomes de carbone, à condition que les radicaux R³, R⁴ et R⁵ contiennent ensemble au moins 5 atomes de carbone et les radicaux R⁶, R⁷ et R⁸ contiennent ensemble au moins 5 atomes de carbone.

2. Composition d'agent de revêtement selon la revendication 1, R¹ représentant hydrogène.

3. Composition d'agent de revêtement selon la revendication 1, R² représentant hydrogène.

4. Composition d'agent de revêtement selon l'une quelconque des revendications 1 à 3, les radicaux R³, R⁴ et R⁵ contenant ensemble 5 à 11 atomes de carbone et les radicaux R⁶, R⁷ et R⁸ contenant ensemble 5 à 11 atomes de carbone.

5. Composition d'agent de revêtement selon l'une quelconque des revendications 1 à 4, le composant (a) contenant au moins un poly(méth)acrylate-polyol ou un polyester-polyol.

6. Composition d'agent de revêtement selon l'une quelconque des revendications 1 à 5, le composant (b) contenant au moins un polyisocyanate bloqué ou non bloqué.

7. Composition d'agent de revêtement selon l'une quelconque des revendications 1 à 6, la composition d'agent de revêtement étant une laque claire.

8. Composition d'agent de revêtement selon l'une quelconque des revendications 1 à 7, l'indice d'hydroxyle du composant (a) ne s'écartant pas de plus de 50% de l'indice d'hydroxyle du composant de type diester de glycérol (c) utilisé dans la composition d'agent de revêtement et/ou la proportion de composant de type diester de glycérol (c) étant de 2 à 20% en poids par rapport au poids total des composants (a) plus (c).

9. Laquage multicouche, qui comprend au moins deux couches, qui sont disposées sur un substrat et qui est **caractérisé en ce que** la couche supérieure des couches est constituée par une composition d'agent de revêtement selon l'une ou plusieurs des revendications 1 à 8.

10. Procédé pour la réalisation d'un laquage multicouche, comprenant les étapes de :
(i) application d'un agent de revêtement de charge sur un substrat non traité ou prétraité et/ou
(ii) application d'au moins une composition de laque de base sur celui-ci et ensuite
(iii) application d'au moins une composition de revêtement selon l'une ou plusieurs des revendications 1 à 8, suivie d'un
(iv) durcissement du laquage multicouche à une température de
(1) jusqu'à maximum 100°C, pour autant que l'agent de réticulation (b) soit un polyisocyanate non bloqué ou
(2) 120°C à 180°C, pour autant que l'agent de réticulation (b) contienne au moins un polyisocyanate bloqué, un réticulant de type aminoplaste ou de la TACT.

11. Procédé pour la réalisation d'un laquage multicouche selon la revendication 10, le substrat dans l'étape (i) étant un substrat métallique prétraité et le prétraitement comprenant une phosphatation et/ou un laquage électrophorétique cathodique par immersion ou le substrat dans l'étape (i) étant un substrat en matériau synthétique.

12. Procédé pour la réalisation d'un laquage multicouche selon l'une quelconque des revendications 10 ou 11, une composition de revêtement selon la revendication 5 étant utilisée dans l'étape (iii).

13. Procédé pour la réalisation d'un laquage multicouche selon l'une quelconque des revendications 10 à 12, une composition de revêtement selon la revendication 7 étant utilisée dans l'étape (iii).

14. Procédé pour la réalisation d'un laquage multicouche selon l'une quelconque des revendications 10 à 13, le substrat dans l'étape (i) étant une carrosserie d'automobile ou une partie d'une carrosserie d'automobile.

15. Substrat, **caractérisé en ce qu'**un laquage multicouche selon la revendication 9 ou selon un procédé selon l'une quelconque des revendications 10 à 14 est appliqué sur celui-ci.
